Europäisches Patentamt

European Patent Office

Office européen des brevets

(19)

(11) Veröffentlichungsnummer: **0 205 902**
**A1**

(12) # EUROPÄISCHE PATENTANMELDUNG

(21) Anmeldenummer: **86106686.8**

(22) Anmeldetag: **16.05.86**

(51) Int. Cl.⁴: **C 09 C 1/50,** B 01 J 4/00

(30) Priorität: **23.05.85 CH 2197/85**

(43) Veröffentlichungstag der Anmeldung: **30.12.86**
**Patentblatt 86/52**

(84) Benannte Vertragsstaaten: **AT BE CH DE FR GB IT LI LU NL SE**

(71) Anmelder: **BERA ANSTALT, Aeulenstrasse 38, FL-9490 Vaduz (LI)**

(72) Erfinder: **Walder, Rudolf, Weinmanngasse 38, CH-8700 Küsnacht (CH)**

(74) Vertreter: **Rottmann, Richard, Rottmann Patentanwälte AG Dufourstrasse 101, CH-8034 Zürich (CH)**

(54) **Anlage zur Russherstellung.**

(57) Im Reaktordeckel eines stehenden Reaktors sind Speiseeinheiten für die dosierte Zufuhr von Luft und einem flüssigen Brennstoff vorhanden. Zur Brennstoffzufuhr ist ein mit einer Sprühdüse (17) versehenes Zuleitungsrohr (7) vorhanden. Das Zuleitungsrohr (7) ist von einem Luftkanal (1, 4) umgeben, welcher in eine Homogenisierkammer (19, 20) mündet. Diese ist mit einer feuerfesten Auskleidung (18, 21) versehen, die das Ende des Zuleitungsrohres samt Sprühdüse (17) umgibt. Ein Hitzeschild (16) in der Form einer Hülse ist am Luftleitkörper (15) befestigt und weist eine einwärts gerichtete ringförmige Platte (22) auf. In dieser Weise wird verhindert, dass aus der Düse heraustretende Kohlenwasserstoffe entlang des Zuleitungsrohres (7) nach oben steigen und Ablagerungen bilden. Ferner kann keine übermäßige Aufheizung des Zuleitungsrohres durch Strahlungswärme erfolgen.

EP 0 205 902 A1

Anlage zur Russherstellung
_____

Die vorliegende Erfindung bezieht sich auf eine Anlage zur Russherstellung in einem stehenden Reaktor, welcher oben durch einen Reaktordeckel verschlossen ist. Im Reaktordeckel sind Speiseeinheiten für die dosierte Zufuhr von Luft und von flüssigem Brennstoff vorhanden, welche Teile dann gemischt und gezündet werden. Die Brennstoffzufuhr erfolgt durch je ein mit einer Sprühdüse versehenes Zuleitungsrohr, welches von einem Luftkanal für die Luftzufuhr konzentrisch umgeben ist. Die beiden Komponenten werden innig gemischt, teils vergast und gleichmässig verteilt im Reaktorraum partiell verbrannt. Die dabei entstehenden Rauchgase und der entstehende Russ werden meistens in einem Wärmeaustauscher gekühlt und einem Filteraggregat zugeführt.

Die Qualität des hergestellten Russes ist von den thermischen Verhältnissen im Reaktor abhängig. Dabei sollte insbesondere eine thermische Ueberbelastung in der Eintrittszone der beiden Komponenten Kohlenwasserstoff und Luft vermieden werden. Zu diesem Zwecke wurde bereits vorgeschlagen, den Reaktordeckel und die Homogenisierkammern durch den Einbau von Kühlelementen zu kühlen. Darüberhinaus ist es aber wichtig, eine vollständige Vermischung der beiden Komponenten Luft und Kohlenwasserstoff vorzusehen. Zu diesem Zwecke kann ein Luftleitkörper dienen, welcher bezüglich der Düse verstellbar ist und eine gründliche Vermischung der genannten Komponenten fördert.

Erfindungsgemäss wird von einer Anlage zur Russherstellung in einem stehenden Reaktor ausgegangen, welcher oben durch einen Reaktordeckel verschlossen ist, in welchem Speiseeinheiten für die dosierte Zufuhr von Luft und einem flüssigen Brennstoff vorhanden sind, welche Teile gemischt und gezündet werden, wobei die Brennstoffzufuhr durch je ein mit einer Sprühdüse versehenes Zuleitungsrohr erfolgt, welches von einem Luftkanal für die Luftzufuhr konzentrisch umgeben ist. In diesem Kanal ist ein Luftleitkörper bezüglich der Düse verstellbar angeordnet und der untere gegen den Reaktor gerichtete Teil des Zuleitungsrohres ist samt Spritzdüse von einer feuerfesten Auskleidung umgeben, welche eine Homogenisierkammer begrenzt.

Eine solche Anlage soll erfindungsgemäss so ausgestaltet sein, dass im Bereiche der Brennstoffzuleitung keine thermische Ueberbeanspruchung auftreten kann. Ferner sollte verhindert werden, dass Kohlenwasserstoffe entlang des Zuleitungsrohres nach oben gelangen und dort Ablagerungen bilden, welche den Russ verunreinigen können. Um dies zu erreichen, wird das Brennstoffzuleitungsrohr samt Düse im Bereiche der Auskleidung mit einem Hitzeschild versehen, welcher gemäss einer bevorzugten Ausführungsform des Erfindungsgegenstandes als eine das Zuleitungsrohr und die Düse konzentrisch umgebende Hülse ausgebildet und im Strömungsweg der Verbrennungsluft am Luftleitkörper befestigt ist. Zur Verhinderung von Ablagerungen ist am unteren Ende der Hülse im Bereiche der Düse eine einwärts gerichtete ringförmige Platte angeordnet.

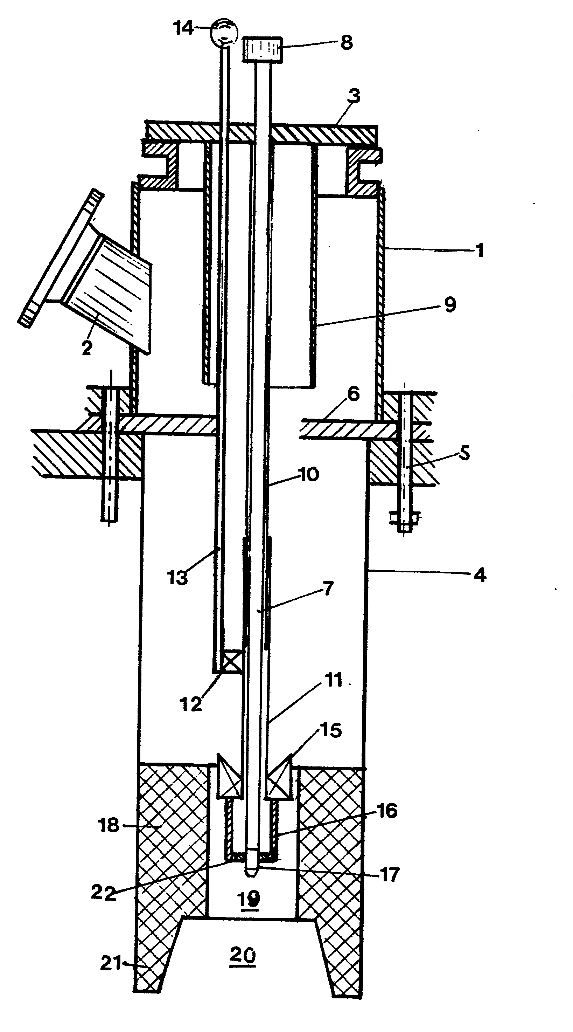

Weitere Merkmale der Erfindung ergeben sich aus der Beschreibung und aus der Zeichnung, in welcher ein Ausführungsbeispiel einer Speiseeinheit der vorgeschlagenen Anlage im Vertikalschnitt dargestellt ist. Sämtliche der nachstehend in der Beschreibung erwähnten und auf der Zeichnung dargestellten Merkmale bilden den Gegenstand der Erfindung, sowohl im einzelnen als auch in beliebiger Kombination.

Die Anlage zur Russherstellung weist einen stehenden Reaktor auf, welcher oben durch einen Reaktordeckel verschlossen ist. Der Reaktordeckel ist zweckmässigerweise domförmig geformt, weist einen ebenen Boden auf und ist mit Ausnehmungen zur Aufnahme von Speiseeinheiten versehen, welche zur dosierten Zufuhr von Luft und einem flüssigen Brennstoff dienen. Die genannten Speiseeinheiten werden so in die Ausnehmungen eingesetzt, dass die Homogenisierkammer derselben im Bereiche des ebenen Bodens des Reaktordeckels liegt.

In der Zeichnung ist eine solche Speiseeinheit im Vertikalschnitt dargestellt. Die Speiseeinheit weist ein zylindrisches Gehäuse 1 auf, welches mit einem seitlichen Stutzen 2 versehen und oben mit Hilfe einer Platte 3 verschlossen ist. Die axiale Fortsetzung des zylindrischen Gehäuses 1 nach unten bildet ein Muffelrohr 4, welches durch eine Schraubenverbindung 5 im Bereiche der unteren Verschlussplatte 6 des Gehäuses 1 an dieses angeschlossen ist.

Zentral in der Mitte des Gehäuses 1 erstreckt sich eine Oellanze 7, welche durch eine entsprechende zentrale Ausnehmung der Platte 3 durch diese hindurch nach oben geführt und mit einer Kupplung 8 ausgestattet ist, mit welcher der Anschluss an eine flexible Leitung erfolgt, durch die Brennstoff zugeführt wird. Im Gehäuse 1 ist ferner ein Einsatzrohr 9 vorhanden, welches an der Platte 3 befestigt ist, sich nach unten gleichachsig zur Oellanze 7 so weit erstreckt, dass zwischen der Verschlussplatte 6 und dem unteren Rand des Einsatzrohres 9 Raum verbleibt. Die Oellanze 7 ist ferner von einem Teleskoprohr umgeben, welches einen festen Teil 10 und einen gegenüber diesem verschiebbaren Teil 11 aufweist. Der feste Teil des Teleskoprohres 10 ist an seinem oberen Ende an der Platte 3 befestigt. Der verschiebbare Teil 11 ist mit Hilfe einer Radialverbindung 12 mit einem stabförmigen Einstellorgan 13 verbunden, welches durch eine entsprechende Ausnehmung der Platte 3 nach oben geführt und mit einem Griff 14 versehen ist. Am unteren Ende des verschiebbaren Teils 11 des Teleskoprohres ist ein Luftleitkörper 15 angeordnet, auf welchem ein sich nach unten erstreckender Hitzeschild 16 befestigt ist. Dieser Hitzeschild 16 ist als Hülse ausgebildet, welche den unteren Teil der Oellanze 7 und gegebenenfalls die Düse 17 am Ende der Oellanze 7 konzentrisch umgibt und im Strömungsweg der Verbrennungsluft liegt.

Der untere Teil des Muffelrohres 4 ist mit einer feuerfesten Auskleidung 18 versehen, welche zunächst einen zylindrischen Raum 19 begrenzt, dessen Breitenausdehnung etwas grösser ist als der Durchmesser des Luftleitkörpers 15. Weiter unten geht dieser zylindrische Raum in eine Kammer 20 über, welche sich konzentrisch erweiternde Wände besitzt. Auch hier ist eine feuerfeste Auskleidung 21 vorhanden. Im Raum 19 und in der Kammer 20 wird der Brennstoff und Luft homogenisiert.

Zur Stauung der Luftströmung und Wirbelbildung im Bereiche der Düse 17 ist der hülsenförmige Hitzeschild 16 mit einer einwärts gerichteten ringförmigen Platte 22 versehen. Die ganze Anordnung ist so getroffen, dass der Hitzeschild 16, welcher z.B. aus rostfreiem Stahl bestehen kann, sowohl innen als auch aussen von Luft umströmt wird, so dass eine wesentliche Kühlung desselben stattfindet. Es wird so verhindert, dass aus der Düse 17 austretende Kohlenwasserstoffe entlang der Oellanze 7 nach oben steigen und Ablagerungen bilden und, dass eine übermässige Aufheizung der Oellanze durch Strahlungswärme erfolgt.

Im Betrieb der beschriebenen Anlage wird Brennstoff,z.B. ein Schweröl, aus einem Tank entnommen und mittels Druckpumpen gefördert und mittels eines nicht dargestellten Durchlauferhitzers auf ca. 130°C erwärmt. Die Förderleitung

wird mit Hilfe der Kupplung 8 an die Oellanze 7 angeschlossen und das erhitzte Schweröl fliesst so über die Oellanze 7 der Einspritzdüse 17 zu. Es können noch Temperatur- und Mengenregler sowie Druckmesser vorhanden sein, welche Einzelheiten als bekannt vorausgesetzt und in der Zeichnung nicht dargestellt sind.

Die Verbrennungsluft wird in bekannter Weise von einem Gebläse geliefert und gelangt durch den seitlichen Stutzen 2 in das zylindrische Gehäuse, nachdem sie auf etwa $200^{o}$C erhitzt wurde. Vom Gehäuse 1 aus gelangt die Luft durch die zentrale Oeffnung der Verschlussplatte 6 in das Muffelrohr 4 und wird zum Luftleitkörper 15 geleitet, welcher mit Hilfe des beschriebenen Teleskoprohres 10,11 in der Höhenstellung veränderbar ist. Durch den Luftleitkörper 15 erfolgt eine intensive Verwirbelung der zuströmenden Heissluft. Die Oellanze wird dabei durch das Hitzeschild 16 sowie durch die Ringplatte 22 vor Ueberhitzung und Verschmutzung geschützt.

Die Russqualität wird durch das Brennstoff-Luftverhältnis bestimmt. Je grösser die innere Oberfläche des Russes sein soll, desto grösser muss der Luftanteil gewählt werden.

In der beschriebenen Weise wurde der Wärmetransport mittels Strahlung durch die Anordnung des Hitzeschildes 16 wesentlich herabgesetzt, und die an der Wand des Hitzeschildes 16 erfolgende Wärmeabsorption von der Luftströmung aufgenommen. Im Raume, wo die Verwirbelung erfolgt, unterbleibt die Zündung, während die Verbrennung in einem Reaktionsraum stattfindet, in welchen die Mischung aus den eingespritzten Kohlenwasserstoffen und der verwirbelten Luft eingeführt wird.

Patentansprüche

1. Anlage zur Russherstellung in einem stehenden Reaktor, welcher oben durch einen Reaktordeckel verschlossen ist, in welchem Speiseeinheiten für die dosierte Zufuhr von Luft und einem flüssigen Brennstoff vorhanden sind, welche Teile gemischt und gezündet werden, wobei die Brennstoffzufuhr durch je ein mit einer Sprühdüse (17) versehenes Zuleitungsrohr (7) erfolgt, welches von einem Luftkanal (1,4) für die Luftzufuhr konzentrisch umgeben ist, in welchem ein Luftleitkörper (15) bezüglich der Düse (17) verstellbar angeordnet und der untere gegen den Reaktor gerichtete Teil des Zuleitungsrohres (7) samt Sprühdüse (17) von einer feuerfesten Auskleidung (18) umgeben ist, welche eine Homogenisierkammer (19,20) begrenzt, dadurch gekennzeichnet, dass das Brennstoff-Zuleitungsrohr (7) samt Düse (17) im Bereiche der Auskleidung (18) mit einem Hitzeschild (16) versehen ist.

2. Anlage nach Anspruch 1, dadurch gekennzeichnet, dass der Hitzeschild (16) als eine das Zuleitungsrohr (7) und die Düse (17) konzentrisch umgebende Hülse ausgebildet und im Strömungsweg der Verbrennungsluft am Luftleitkörper (15) befestigt ist.

3. Anlage nach Anspruch 2, dadurch gekennzeichnet, dass am unteren Ende der Hülse (16) im Bereiche der Düse (17) eine einwärts gerichtete ringförmige Platte (22) angeordnet ist.

XA 5691 EP
14.05.1986/RR/he

0205902

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 567 395 (E.W. HENERSON et al.) * Claim 1 * | 1 | C 09 C 1/50 B 01 J 4/00 F 23 C 7/00 |
| | --- | | |
| A | US-A-3 460 911 (J.C. KREJCI et al.) * Claims 1,5,6,8 * | 1 | |
| | --- | | |
| A | DE-A-2 512 716 (SKODA, OBOROVY PODNIK) * Claim 1 * | 1 | |
| | --- | | |
| A | CA-A-1 167 369 (NATIONAL RESEARCH COUNCIL OF CANADA) * Claim 1 * | 1 | |
| | --- | | |
| A | GB-A- 663 669 (AB GOTAVERKEN) | | RECHERCHIERTE SACHGEBIETE (Int. Cl.4) |
| | --- | | C 09 C 1/00 B 01 J 4/00 F 23 D 11/00 F 27 D 23/00 F 23 C 7/00 F 23 M 5/00 |
| A | FR-A-2 216 871 (G. CLUZEAU) | | |
| | --- | | |
| A | EP-A-0 137 362 (VEB ROHRKOMBINAT STAHL- UND WALZWERK RIESA) | | |
| | ----- | | |

Der vorliegende Recherchenbericht wurde für alle Patentansprüche erstellt.

| Recherchenort DEN HAAG | Abschlußdatum der Recherche 19-09-1986 | Prüfer SCHUT,R.J. |
|---|---|---|